# EUROPEAN PATENT SPECIFICATION

(11) **EP 1 273 143 B1**
(45) Date of publication and mention of the grant of the patent: **19.07.2006**
(21) Application number: 01914152.2
(22) Date of filing: 14.03.2001
(51) Int. Cl.: H04L 12/64, H04Q 11/04

(54) **DYNAMIC SELECTION OF A COMMUNICATION PATH**
DYNAMISCHE SELEKTION EINES VERBINDUNGSWEGES
SELECTION DYNAMIQUE D'UNE VOIE DE COMMUNICATION

(30) Priority: 06.04.2000 IL 13550400
(43) Date of publication of application: 08.01.2003
(73) Proprietor: ECI TELECOM LTD., Petach-Tikva 49517 (IL)
(72) Inventor: SEGEV, Aharon, 55900 Ganei Tikva (IL); ZELIKOVITZ, Erez, 49281 Petach Tikva (IL)
(74) Representative: Curell Aguilà, Marcelino
(86) International application number: PCT/IL2001/000242
(87) International publication number: WO 2001/078335

(56) References cited:
- EP-A- 0 942 622
- KAZUHIRO KONDO ET AL: "PACKET SPEECH TRANSMISSION ON ATM NETWORKS USING A VARIABLE RATE EMBEDDED ADPCM CODING SCHEME" IEICE TRANSACTIONS ON COMMUNICATIONS, INSTITUTE OF ELECTRONICS INFORMATION AND COMM. ENG. TOKYO, JP, vol. E76-B, no. 4, 1 April 1993 (1993-04-01), pages 420-430, XP000378274 ISSN: 0916-8516

## Description

### FIELD OF THE INVENTION

The present invention generally relates to communication systems, and more particularly to voice communication in cell-based communication systems and packet-based communication systems.

### BACKGROUND OF THE INVENTION

Packet-based communication systems typically employ elements that enable mapping of coded voice frames in a voice over Internet Protocol (VoIP) mode. Cell-based communication systems typically employ elements that enable mapping of coded voice frames in a voice over ATM (VoATM) mode (ATM - Asynchronous Transfer Mode). Such elements are typically embedded in integrated access devices (IADs) at subscriber units, but each IAD enables mapping of the coded voice frames in only one of the above mentioned modes during normal system operation. Examples of IADs including such elements are TB50 IAD which is commercially available from TollBridge Inc. from Santa Clara, California USA, and MXR which is commercially available from CopperCom Inc, from Santa Clara, California USA. However, none of these elements enables dynamic or static selection of the mapping mode of the coded voice frames for transmission over different transport layers.

Published European Patent Application EP 828363A2 describes a modem that operates selectively in the voice-band frequency band and at higher frequency bands. The modem supports multiple line codes like DMT and CAP, but a selection of a line code is performed in the physical layer.

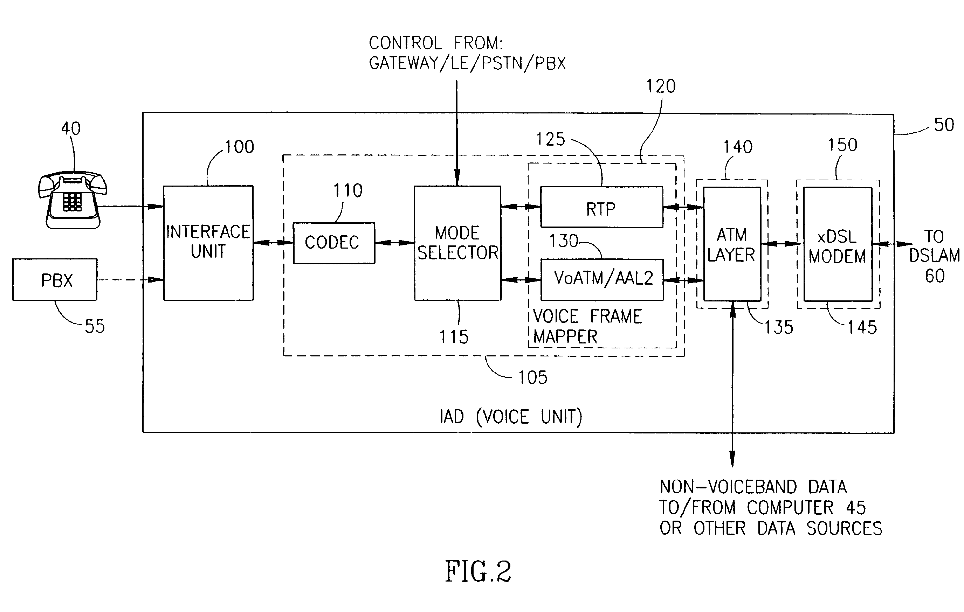

An article to Kazuhiro Kondo et al "Packet speech transmission on ATM networks using a variable rate embedded ADPCM coding scheme" (IEICE transactions on communications, institute of electronic information and comm. eng. Tokyo , JP, vol E76-B, no.4, April 1993 /1993-04-01/, pages 420-430, XP000378274 ISSN:0916-8516) discloses, in Fig. 2 and page 423, a device for a communication network associated with a transport layer ATM and an interface unit and adapted to receive coded voice signals PCM or CCIT G.721, and a mode selector to select one of a number of modes of mapping the coded signals for transmission over a transport layer, and a voice signal mapper for mapping the coded signal according to the selected mode of mapping. The described solution is directed to enhancement of quality of transmission of speech via an ATM network, by selectively applying various mapping algorithms to compensate errors introduced by the property of a fixed-length cell which is intrinsic for ATM. The different mapping algorithms are applied to different periods of transmission (active and silent periods of transmission are coded at different coding rates).

### SUMMARY OF THE INVENTION

The present invention seeks to provide novel apparatus and improved method for optimizing voice communication in communication systems operating via communication networks, particularly cell-based communication networks and packet based communication networks.

By the present invention, there is provided a device for use in a communication network, adapted to be operatively associated with a transport layer and an interface unit and adapted to receive coded voice signals, the device comprising:
a mode selector adapted, in response to an external control signal, to select per each voice session one of a plurality of modes of mapping the coded voice signals, for transmission over a transport layer; and
a voice signal mapper operatively associated with the mode selector and the transport layer and operative to map the coded voice signals according to the selected one of the plurality of modes of mapping, thereby to generate mapped voice signals suitable for transmission over the transport layer to one of a plurality of networks respectively associated with the plurality of modes of mapping.

According to a preferred embodiment of the invention there is provided apparatus comprising the device of present invention and a codec operative to convert received voice signals to coded voice frames using a coding algorithm. Examples of such coding algorithms are: an algorithm compatible with ITU recommendation G.711; an algorithm compatible with ITU recommendation G.723.1; an algorithm compatible with ITU recommendation G.726; an algorithm compatible with ITU recommendation G.728; an algorithm according to ITU recommendation G.729 and its annexes; full rate GSM algorithm; half rate GSM algorithm and enhanced rate GSM algorithm.

The plurality of modes of mapping the coded voice signals preferably includes a voice over Internet Protocol (VoIP) mode, and a voice over ATM (VoATM) mode. The transport layer preferably includes at least one of the following: an ATM layer, and a Frame-Relay.

According to another preferred embodiment, the apparatus further comprises an interface unit that is capable of converting voice information to voice signals in a pulse-code-modulation (PCM) G.711 format.

Still by another embodiment of the present invention, the mode selector is controlled by an external control device. Such external control device may be a local exchange (LE), a gateway, a private branch exchange (PBX), and a network server, and the like.

Preferably, the mode selector is operative to select said one of a plurality of modes of mapping coded voice signals, e.g. coded voice frames, in response to a control signal provided by the external control device. More preferably, this control signal is operative to determine one of a plurality of modes of mapping the coded voice frames'.

The control signal is typically generated in response to a decision initiated at the user level, and/or the control signaling level and/or the management level. The control signal may be generated in response to a selection of an application type including, for example, separation of a private type voice session from a business type voice session. The business type voice session may include at least one session via a virtual private network (VPN) .

According to yet another preferred embodiment, the external control device is operative to generate the control signal in response to an indication of occurrence of an event matching at least one criterion determined by an operator of the communication network. Examples of such a criterion are: a call destination determination; a subscriber registration predetermination; a network configuration determination; a predetermined communication load in the communication network; a determination of congestion of voice sessions; a determination of failure of a communication route; a load sharing determination; a lowest-cost/best-cost routing determination, and a per service routing determination, and the like.

Additionally, the apparatus of the present invention also includes a digital-subscriber-line (DSL) modem operatively associated with the transport layer and operative to receive the mapped voice signals via the transport layer and to transmit the mapped voice signals to a DSL Access Multiplexer (DSLAM). The DSL modem preferably includes a xDSL modem.

Preferably, the interface unit receives the voice information from at least one of the following: at least one communication appliance, and a PBX.

Further preferably, the at least one communication appliance includes at least one of the following: a telephone, a facsimile and a modem-based appliance e.g. a computer, and a computer-based appliance.

According to another aspect of the present invention, there is provided a communication apparatus (e.g. to be located in a street cabinet, in the central office, etc.) which comprises:
a plurality of mode selectors, each adapted to select one of a plurality of modes of mapping coded voice signals;
a plurality of transport layer interfaces; and
a plurality of voice signals mappers, each operatively associated with a mode selector and a transport layer interface and operative to map the coded voice signals according to said one of the plurality of modes of mapping the coded voice signals selected by the mode selector thereby to generate mapped voice signals suitable for transmission over the transport layer.

According to a preferred embodiment of the invention, the plurality of the mode selectors are controlled by at least one external control device, e.g. by a local exchange (LE), a gateway, a private branch exchange (PBX), a network server, and the like.

In accordance with yet another aspect of the present invention there is provided a communication system including at least one communication appliance, the above-described device in the form of IAD (Intergrated Access Device)operatively associated with the at least one communication appliance and operative to convert voice information received from the at least one communication appliance to voice signals in ATM-over-xDSL format, a DSLAM operatively associated with the IAD and operative to extract the voice signals received in ATM-over-xDSL format. The DSLAM is preferably capable of being operatively associated with a non-packet based network (say, a cell-based or a switched network) and a packet-based network, and operative to receive the voice signals in ATM format and to provide the voice signals in ATM format in accordance with a routing selection performed at the IAD to one of the following networks: either the switched network, the cell-based network or the packet-based network.

Additionally, the communication system also includes a PBX operatively associated with the at least one communication appliance and the IAD, wherein the voice information received from the at least one communication appliance is provided to the IAD via the PBX.

Further additionally, the communication system also includes a gateway and a local exchange (LE) operatively associated with the gateway, and the ATM network is operatively associated with the switched network via the gateway and the LE. The switched network preferably includes a switched telephone network.

Still additionally, the communication system also includes a router, and the ATM network is operatively associated with the packet-based network via the router. The packet-based network preferably includes at least one of the following configurations: a WAN, and a MAN. Preferably, each of the configurations is operative to provide access to at least one of the following: the Internet, an Intranet, and an Extranet.

In accordance with yet another aspect of the present invention, there is also provided a method for selecting a mode of mapping voice information for transmission over a transport layer of a communication network, the method comprising:
receiving voice signals in a form of coded voice signals; and
for each voice session, in response to an external control signal, selecting one of a plurality of modes of mapping said voice signals for transmission over the transport layer to one of a plurality of networks respectively associated with the plurality of modes of mapping.

According to the preferred version of the method, it comprises a preliminary step of converting the voice information to the coded voice signals using a compression algorithm.

The plurality of modes of mapping the coded voice signals preferably include a voice over Internet Protocol (VoIP) mode, and a voice over ATM (VoATM) mode.

Additionally, the method provided also includes the step of mapping the coded voice signals according to the one of a plurality of modes of mapping the coded voice signals thereby to generate mapped voice signals suitable for transmission over the transport layer.

Preferably, the converting step includes the steps of converting the voice information to voice signals in a pulse-code-modulation (PCM) G.711 format, and converting the voice signals in the PCM G.711 format to the coded voice signals.

The transport layer preferably includes at least one of the following: an ATM layer, and a Frame-Relay.

In accordance with the present invention, the voice signals can be received in their coded form from a cellular network.

### BRIEF DESCRIPTION OF THE DRAWINGS

The present invention will be understood and appreciated more fully from the following detailed description, taken in conjunction with the drawings in which:
Fig. 1 is a simplified pictorial illustration of a preferred implementation of a communication system constructed and operative in accordance with a preferred embodiment of the present invention;
Fig. 2 is a simplified pictorial illustration of a preferred implementation of an integrated access device (IAD) in the communication system of Fig. 1, the IAD being constructed and operative in accordance with a preferred embodiment of the present invention; and
Fig. 3 is a simplified flow chart illustration of a preferred method of operation of the apparatus of Figs. 1 and 2.

### DETAILED DESCRIPTION OF A PREFERRED EMBODIMENT

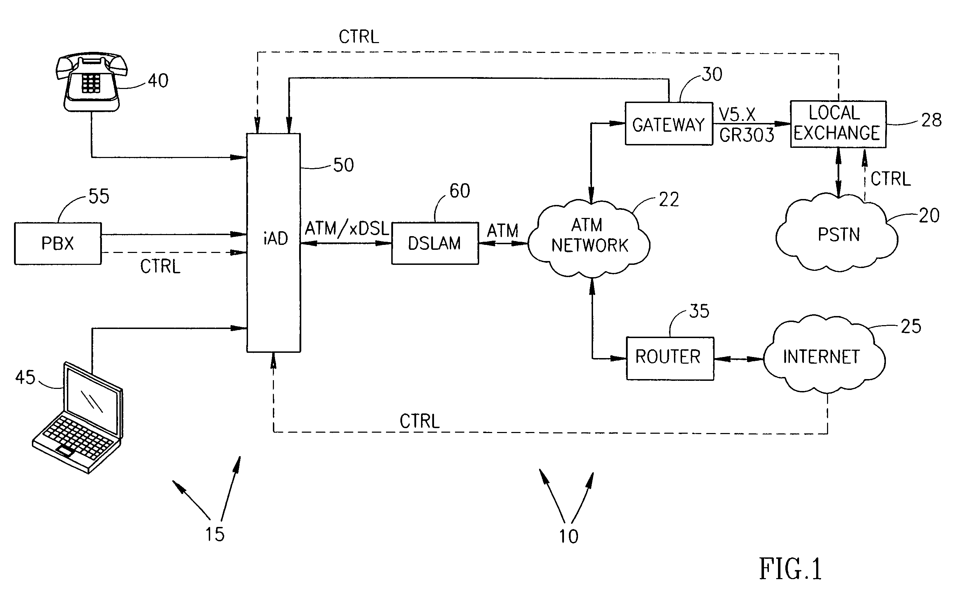

Reference is now made to Fig. 1 that is a simplified pictorial illustration of a communication system 10 constructed and operative in accordance with a preferred embodiment of the present invention.

Preferably, the communication system 10 enables communication between a subscriber unit 15, a switched network and a packet-based network via a cell-based network. For simplicity, Fig. 1 and the description below refer to an Access Network configuration but it is appreciated that the present invention is not limited by the type of network configuration employed, and other network configurations may alternatively be used.

The switched network typically includes a public switched telephone network (PSTN) 20. The cell-based network typically includes an ATM (Asynchronous Transfer Mode) network 22 and the packet-based network typically includes an IP (Internet Protocol) network 25. It is appreciated that the IP network 25 may be implemented, for example, in configurations such as a metropolitan-area-network (MAN) and a wide-area-network WAN) to provide access to the Internet or to form an Intranet or an Extranet operating according to the Internet Protocol. The terms "Internet" and "IP network" are interchangeably used throughout the specification and claims to refer to any of the above mentioned configurations of the network 25.

Preferably, the subscriber unit 15 communicates with the PSTN 20 via a local exchange (LE) 28 and a gateway 30 operatively associated with the LE 28, and with the Internet 25 via a router 35. The gateway 30 and the router 35 are both preferably operatively associated with the ATM network 22 or a Frame-Relay network (not shown).

It is appreciated that the gateway 30 and the router 35 may be embodied in a single unit (not shown) having a gateway functional block (not shown) and a router functional block (not shown). In such a case, the subscriber unit 15 may communicate with the Internet 25 via the router functional block and with the PSTN 20 via the gateway functional block. Both the gateway 30 and the router 35 may be separately located at Internet Service Provider (ISP) premises or collocated with LE 28 or PSTN 20 operator premises. Furthermore, each of an ISP and a PSTN operator may own the gateway 30 and the router 35.

The subscriber unit 15 typically includes at least one communication appliance such as a telephone 40 and a computer 45 that may communicate voice information as well as other types of information, such as facsimile information and computer generated data. The description below refers only to communication of voice, facsimile and any suitable type of voice-band data that are sometimes referred to hereinafter as "voice information". However, it should be appreciated that the subscriber unit 15 also enables communication of data that is not communicated in the voice-band via the communication system 10.

For simplicity, the description below refers to one telephone 40 and one computer 45 only. However, it is appreciated that the present invention is not limited by the number and type of communication appliances at the subscriber unit 15, and rather a plurality of telephones 40 or telephone-based appliances such as facsimile machines and modem-based appliances, and computers 45 or computer-based appliances may be employed at the subscriber unit 15.

The subscriber unit 15 may also preferably include an integrated access device (IAD) 50 that is operatively associated with the telephone 40 and the computer 45 and is operative to convert the voice information received from the telephone 40 or the computer 45 to voice signals in standard ATM-over-xDSL format. The term "xDSL" is used throughout the specification and claims to refer to any of the well-known family of digital-subscriber-line (DSL) standards, such as ADSL, HDSL, VDSL and SDSL.

It is appreciated that the subscriber unit 15 may optionally include a private branch exchange (PBX) 55 that is typically a private automatic branch exchange (PABX). In such a case, a plurality of telephones 40 may be operatively associated with the PBX 55, and the PBX 55 may be operatively associated with the IAD 50 along with the computer 45. The voice information received from the plurality of telephones 40 is then preferably provided to the IAD 50 via the PBX 55. The computer 45 may be connected to the IAD 50, for example, via a local-area-network (LAN) (not shown) in which case the computer 45 provides to the IAD 50, via the LAN, data that is not in the voice-band.

Preferably, the IAD 50 is operatively associated with a Digital-Subscriber-Line Access Multiplexer (DSLAM) 60. The DSLAM 60 is preferably operative to aggregate, concentrate and switch the voice signals in ATM-over-xDSL signals, and to provide voice signals in ATM format to the ATM network 22. Alternatively, the IAD 50 may be operatively associated with the Frame-Relay network, and the voice signals in ATM-over-xDSL format may be mapped to a format used in the Frame-Relay network. The Frame-Relay network may then convert the voice signals in the Frame-Relay network format to voice signals in ATM format and provide the voice signals in ATM format to the ATM network 22. For simplicity, the description below refers to communication between the IAD 50 and the ATM network 22 via the DSLAM 60 only, but it is appreciated that the Frame-Relay network, as well as other appropriate networks, may alternatively be used without limiting the present invention.

Preferably, the ATM network 22 is operative to receive the voice signals in ATM format and to switch and direct the voice signals in ATM format to a destination via one of the following communication routes:
(1) A communication route from the ATM network 22 via the gateway 30 and the LE 28 to the PSTN 20; and
(2) A communication route from the ATM network 22 via the router 35 to the Internet 25.

Thus, the ATM network 22 may use different communication routes that may be implemented either via permanent virtual circuits (PVCs) or switched virtual circuits (SVCs) respectively. The communication routes are preferably used for transmitting the voice signals in ATM format to a destination. It is appreciated that a selection of a communication route for transmitting the voice signals in ATM format is preferably performed at the IAD 50 in response to a control signal provided to the IAD 50 by an element in the communication system 10 other than the IAD 50 and in accordance with a switching scheme of the communication system 10. For example, the control signal may be generated in the PSTN 20, or the LE 28 or the gateway 30 and transmitted to the IAD 50 upon dialing a predetermined destination number/address. Alternatively, the control signal may be generated when the PBX 55 is addressed through dialing a prefix number. As mentioned before, it should be appreciated that the control signal may be generated and provided to the IAD 50 in accordance with any suitable management or control mechanism provided by the PSTN 20 operator.

In a preferred embodiment of the present invention the selection of a communication route for transmitting the voice signals in ATM format may also be performed per application type at a user level. In such a case, a user of the subscriber unit 15, or the PSTN 20 operator operating in response to a request from the user, may configure the IAD 50 so that, for example, when the user dials a destination number/address with a first prefix or a pre-determined plan scheme, the resulting voice session is routed to a first communication route, and when the user dials a destination number/address with a second prefix the resulting voice session is routed to a second communication route.

Thus, for example, in small-office home-office (SOHO) applications, the user may dial, for example, a prefix "8" for private type voice sessions via the communication route (1), and a prefix "9" for business type voice sessions with coworkers via the communication route (2). Preferably, by dialing the prefix "9" and a destination number/address, the user joins a virtual private network (VPN) enabled via the Internet 25 and shared by all employees of a company for which he works. It is appreciated that such selections of the communication routes may also be used to separate communication accounts for various applications.

Preferably, the control signal may be predetermined and received at a management level via a management plane over a separate channel (not shown). Alternatively, the control signal may be separately generated for each voice session being conducted, preferably before or at initialization of each voice session or a portion thereof. In such a case, the control signal may be received at a control signaling level via a control plane over a separate channel (not shown). It is appreciated that since the IAD 50 may simultaneously support a plurality of separate voice sessions, each voice session may independently be switched to the PSTN 20 or to the IP network 25 in accordance with the switching scheme of the communication system 10.

Reference is now additionally made to Fig. 2 which is a simplified pictorial illustration of a preferred implementation of the IAD 50 in the communication system 10 of Fig. 1, the IAD 50 being constructed and operative in accordance with a preferred embodiment of the present invention. It is appreciated that Fig. 2 and the description of the IAD 50 below refer to the voice unit portion only.

Preferably, the IAD 50 includes an interface unit 100 that receives the voice information generated at the telephone 40 or the computer 45. In a configuration in which the subscriber unit 15 includes the PBX 55, the interface unit 100 may receive a representation of the voice information generated at the telephone 40 from the PBX 55 rather than the voice information directly from the telephone 40. It is appreciated that the voice information and the representation of the voice information may be either in an analog form or a digital form. The digital form of the voice information and the representation of the voice information may include a pulse-code-modulation (PCM) G.711 format. The term "G.711 format" refers to a format provided in accordance with the International Telecommunication Union (ITU) recommendation G.711 and/or the new annex to ITU recommendation G.711 regarding packet loss concealment (PLC) for optimizing PCM signals for packet based network transport.

The interface unit 100 is preferably operative to convert the voice information or the representation of the voice information to voice signals in PCM G.711 format. If the voice information or the representation of the voice information is already provided to the interface unit 100 in the PCM G.711 format, the interface unit 100 preferably outputs the voice signals in PCM G.711 format after appropriate level conversion in the physical layer.

Preferably, the interface unit 100 is operatively associated with an integrated circuit 105 that is preferably embodied in the IAD 50. The integrated circuit 105 preferably includes the following units: a coder/decoder (codec) 110; a mode selector 115; and a voice frame mapper 120.

The codec 110 is preferably operatively associated with the interface unit 100 and is operative to receive the voice signals in PCM G.711 format from the interface unit 100, and to convert the voice signals in PCM G.711 format to coded voice frames using a conventional compression algorithm for speech, such as one of the following compression algorithms: a compression algorithm according to ITU recommendation G.711; a compression algorithm according to ITU recommendation G.723.1 for coding of speech at 5.3 and 6.3 kb/s; a compression algorithm according to ITU recommendation G.726 for coding of speech at at least one of 40, 32, 24 and 16 kb/s using Adaptive Differential Pulse Code Modulation (ADPCM); a compression algorithm according to ITU recommendation G.728 for coding of speech at 16 kb/s; and a compression algorithm according to ITU recommendation G.729 and its annexes for coding of speech at 8 kb/s. It is appreciated that other suitable compression algorithms may alternatively be used. It is further appreciated that the codec 110 may receive other digital signals, such as GSM signals, -from elements external to the IAD 50, but for simplicity such signals are not shown in Fig. 2 or referred to herein below.

The mode selector 115 is preferably operatively associated with the codec 110 and is operative to select one of a plurality of modes of mapping the coded voice frames. The plurality of modes of mapping the coded voice frames may preferably include at least the following: a voice over Internet Protocol (VoIP) mode; and a voice over ATM (VoATM) mode.

In a preferred embodiment of the present invention the mode selector 115 is controllable by an element external to the IAD 50. The element external to the IAD 50 may include, for example, at least one of the following: the LE 28; the gateway 30; the PBX 55 and any suitable element in the PSTN 20. Preferably, the mode selector 115 is operative to select the one of a plurality of modes of mapping the coded voice frames in response to an external control signal provided by the element external to the IAD 50 and in accordance with the switching scheme and the management or control mechanism of the communication system 10 as mentioned above with reference to Fig. 1. Preferably, the control signal is operative to determine the one of a plurality of modes of mapping the coded voice frames. An alternative way of implementing the present invention is by incorporating selector 115 in DSLAM 60 (rather than in IAD 50) so that certain AAL2 cells (as determined by the controlling means) are converted into their appropriate IP form (e.g. using RTP) and transmitted via router 35 and along IP network 25.

It is appreciated that external control of the mode selector 115 as mentioned above is preferably dynamic and performed for each voice session being conducted. In such a case, the mode selector 115 is preferably operative to separately select the one of the plurality of modes of mapping the' coded voice frames for each voice session, preferably in response to an indication of occurrence of an event matching at least one criterion determined by an operator of the communication system 10.

The at least one criterion may include, for example, at least one of the following: a call destination determination; a subscriber registration predetermination; a network configuration determination; a predetermined communication load in the communication system 10; a determination of congestion of voice sessions; a determination of failure of one of the communication routes; a load sharing determination; a lowest-cost routing determination, and a per service routing determination. Corresponding events matching the above mentioned examples may be as follows: dialing a number prefix or a destination number determined by the destination determination; subscriber selection of a preferred communication route from the communication routes upon registration; a current network configuration that determines a communication route from the communication routes; communication overload; a congestion of current voice sessions; failure of one of the communication routes; a current requirement for load sharing; identification of a current lowest-cost or best-cost communication route; and identification of a current service.

It is appreciated that the mode selector 115 preferably selects the one of the plurality of modes of mapping the coded voice frames before or at initialization of each voice session or a portion thereof.

The voice frame mapper 120 is preferably operatively associated with the mode selector 115 and is operative to map and adapt the coded voice frames according to the one of the plurality of modes of mapping the coded voice frames selected by the mode selector 115 thereby to generate mapped voice frames. The voice frame mapper 120 may include an adaptation function mapper 125 that maps the coded voice frames to provide VDIP frames in the conventional format Frame/RTP/UDP/IP/AAL5/ATM, and a processor 130 that maps the coded voice frames to provide VoATM frames in the conventional format Frame/AAL2/ATM. Throughout the specification and claims the term "RTP" refers to Real Time Protocol, the term "UDP" refers to User Datagram Protocol, the term "IP" refers to Internet Protocol, and the term "AAL" refers to ATM Adaptation Layer. The terms "AAL2" and "AAL5" refer to different ATM adaptation layers as defined by ITU Recommendations I.363.2 and I.363.5 respectively.

Preferably, the voice frame mapper 120 may be also operatively associated with a transport layer, such as an ATM transport layer 135 that may be embodied in a separate integrated circuit 140. It is appreciated that the mapped voice frames generated by the voice frame mapper 120 are preferably provided in a format suitable for transmission over the ATM transport layer 135. It is appreciated that the ATM transport layer 135 may also receive data which is not in the voice-band from the computer 45 or from other data sources that provide data which is not in the voice-band.

Preferably, the IAD 50 also includes a digital-subscriber-line (DSL) modem 145 that may be embodied in yet another separate integrated circuit 150. The DSL modem 145 is preferably operatively associated with the ATM transport layer 135 and is operative to receive the mapped voice frames via the ATM transport layer 135 and to transmit the mapped voice frames to the DSLAM 60. It is appreciated that the DSL modem 145 may include a conventional xDSL modem.

It is appreciated that the interface unit 100, the codec 110, the mode selector 115, the voice frame mapper 120, the transport layer 135 and the DSL modem 145 may each be' implemented by a combination of at least two sub-units to provide the required functionality. In such a case, each sub-unit of the mode selector 115 may be controlled, for example, by a different element external to the IAD 50, and the selection of the one of the plurality of modes of mapping the coded voice frames is preferably determined by a combination of control signals provided by the different elements external to the IAD 50.

Alternatively, in an embodiment in which the mode selector 115 is implemented as a single unit, the mode selector 115 may receive control signals from a plurality of elements external to the IAD 50, and the selection of the one of the plurality of modes of mapping the coded voice frames is preferably determined by the combination of control signals provided by the different elements external to the IAD 50.

The operation of the apparatus of Figs. 1 and 2 is now briefly described. Preferably, voice information generated during an incoming voice session initiated either at the telephone 40 or the computer 45 is provided to the IAD 50. In a configuration in which the telephone 40 is operatively associated with the PBX 55, the voice information may be provided to the IAD 50 via the PBX 55.

In the IAD 50, the voice information is converted to voice signals in PCM G.711 format at the interface unit 100. The interface unit 100 preferably provides the voice signals in PCM G.711 format to the codec 110, and the codec 110 preferably converts the voice signals in PCM G.711 format to coded voice frames using one of the above mentioned compression algorithms. Preferably, the codec 110 provides the coded voice frames to the mode selector 115.

The mode selector 115 may select, for example, either the VoIP mode that determines selection of the communication route (2), or the VoATM mode that determines selection of the communication route (1) . If the VoIP mode is selected', the incoming voice session is preferably communicated via the Internet 25. If the VoATM mode is selected, the incoming voice session is preferably communicated via the gateway 30 and the LE 28 to the PSTN 20.

Preferably, in a case that a current communication load at the LE 28 is high, that is the LE 28 simultaneously supports a plurality of voice and/or data sessions, the LE 28, or the gateway 30, may transmit to the mode selector 115 a control signal indicating that the LE 28 is overloaded. When the mode selector 115 receives the control signal from the LE 28, the mode selector 115 may select the VoIP mode and provide an indication of the selection of the VoIP mode to the voice frame mapper 120 together with the coded voice frames.

The voice frame mapper 120 preferably processes the coded voice frames so as to provide VoIP frames in the format Frame/RTP/UDP/IP/AAL5/ATM and provides the VoIP frames to the xDSL modem 150 via the ATM layer 140. The xDSL modem 150 preferably provides the VoIP frames to the ATM network 22 via the DSLAM 60. In such a case the ATM network 22 preferably routes the VoIP frames to the Internet 25 via the router 35.

Preferably, in a case that a current communication load over the Internet 25 or at the router 35 is high, that is the Internet 25 simultaneously supports a plurality of voice and/or data sessions, the router 35, or an Internet server (not shown), may transmit to the mode selector 115 a control signal indicating overload of communication via the Internet 25. When the mode selector 115 receives the control signal from the router 35, the mode selector 115 may select the VoATM mode and provide an indication of the selection of the VoATM mode to the voice frame mapper 120 together with the coded voice frames.

The voice frame mapper 120 preferably processes the coded voice frames so as to provide VoATM mapped frames in the format Frame/AAL2/ATM and provides the VoATM mapped frames to the xDSL modem 150 via the ATM layer 140. The xDSL modem 150 preferably provides the VoATM mapped frames to the ATM network 22 via the DSLAM 60. In such a case the ATM network 22 preferably routes the VoATM mapped frames to the PSTN 20 via the LE 28 and the gateway 30.

It is appreciated that a selection of a mapping mode of the coded voice frames by the mode selector 115 may be different for other incoming voice sessions, preferably, according to current communication loads at the LE 28 or the PSTN 20 and the Internet 25. Preferably the mode selector 115 performs the selection of the mapping mode of the coded voice frames before or at initialization of each voice session or a portion thereof.

It is appreciated that the generation of the control signal, which results in a selection of the mapping mode of the coded voice frames, may alternatively be performed according to criteria other than communication load at the communication system 10, such criteria including, for example, the at least one criterion mentioned above. Furthermore, in a case that the control signal is generated per application type, as mentioned above with reference to Fig. 1, the selection of the mapping mode of the coded voice frames is preferably performed only according to a selected application type and is unrelated to the communication load of the communication system 10 or to the other criteria.

Preferably, the selection of the mapping mode of the coded voice frames is also applied, in each voice session, to a downstream direction from the PSTN 20 or the Internet 25 to the subscriber unit 15.

It is appreciated that conventional IADs, such as TB50 IAD which is commercially available from TollBridge Inc. from Santa Clara, California USA and MXR which is commercially available from CopperCom, from Santa Clara, California USA, typically include integrated circuits that enable communication either in a VoIP mode or in a VoATM mode, but do not enable dynamic, per call or per other criteria selection of a processing mode as in the present invention.

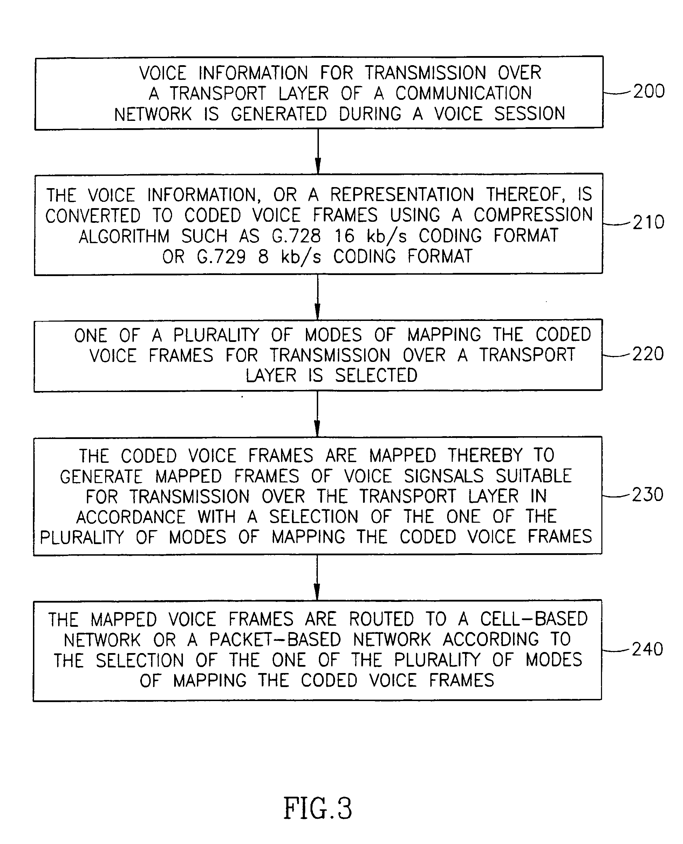

Reference is now made to Fig. 3 which is a simplified flow chart illustration of a preferred method of operation of the apparatus of Figs. 1 and 2.

Preferably, voice information for transmission over a transport layer of a communication network is generated during a voice session (step 200). The voice information, or a representation thereof, is converted to coded voice frames using a compression algorithm, such as a G.728 16 kb/s coding format or G.729 8 kb/s coding format (step 210). Then, one of a plurality of modes of mapping the coded voice frames for transmission over a transport layer is selected (step 220), preferably in response to a control signal generated as a result of an indication of a current communication load of the communication network, or per application type, or per other criteria. The plurality of modes of mapping the coded voice frames preferably includes: a voice over Internet Protocol (VoIP) mode; and a voice over ATM (VoATM) mode. The transport layer preferably includes an ATM transport layer.

In accordance with a selection of the one of the plurality of modes of mapping the coded voice frames, the coded voice frames are preferably mapped thereby to generate mapped frames of voice signals that are suitable for transmission over the transport layer (step 230). The mapped frames of the voice signals are preferably routed to a cell-based network or to a packet-based network according to the selection of the one of the plurality of modes of mapping the coded voice frames (step 240).

Preferably, the selection of the one of the plurality of modes of mapping the coded voice frames is performed for each voice session, preferably, before or at initialization of each voice session or a portion thereof. The control signal that causes the selection may also preferably be operative to determine the one of a plurality of modes of mapping the coded voice frames.

It is appreciated that various features of the invention that are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described herein above. Rather the scope of the invention is defined by the claims that follow.

## Claims

1. A device for use in a communication network, adapted to be operatively associated with a transport layer and an interface unit and adapted to receive coded voice signals, the device comprising:
a mode selector (115) adapted, in response to a control signal from an external control device, to select per each voice session one of a plurality of modes of mapping the coded voice signals, for transmission over a transport layer; and
a voice signal mapper (120) operatively associated with the mode selector (115) and the transport layer and operative to map the coded voice signals according to the selected one of the plurality of modes of mapping, thereby to generate mapped voice signals suitable for transmission over the transport layer to one of a plurality of networks (20,25) respectively associated with the plurality of modes of mapping.

2. A device of claim 1 comprising a codec (110) operative to convert received voice signals to coded voice signals using a coding algorithm.

3. A device according to claim 2 and wherein said coding algorithm comprises at least one of the following: an algorithm compatible with ITU recommendation G.711; an algorithm compatible with ITU recommendation G.723.1; an algorithm compatible with ITU recommendation G.726; an algorithm compatible with ITU recommendation G.728; an algorithm according to ITU recommendation G.729 and its annexes; full rate GSM algorithm; half rate GSM algorithm; and enhanced rate GSM algorithm.

4. A device according to claim 1, wherein said coded voice signals are in the form of coded voice frames and the plurality of modes of mapping said coded voice frames comprise at least one of the following: a voice over Internet Protocol (VoIP) mode; and a voice over ATM (VoATM) mode.

5. A device according to claim 2 or 3, further comprising an interface unit (100) that is capable of converting voice information to voice signals in a pulse-code-modulation (PCM) G.711 format.

6. A device according to claim 1 and wherein said external control device comprises at least one of the following: a local exchange (LE) (28), a gateway (30), a private branch exchange (PBX) (55), and a network server.

7. A device according to claim 6 and wherein said control signal is operative to determine said one of a plurality of modes of mapping the coded voice signals.

8. A device according to claim 6, wherein said control signal is generated in response to a decision initiated at at least one of the following levels: a user level, a control signaling level; and a management level.

9. A device according to any one of claims 1 to 8 and wherein said external control device is operative to generate said control signal in response to an event matching at least one criterion determined by an operator of the communication network.

10. A device according to claim 9, wherein said at least one criterion comprises at least one of the following: a call destination determination; a subscriber registration predetermination; a network configuration determination; a predetermined communication load in the communication network; a determination of congestion of voice sessions; a determination of failure of a communication route; a load sharing determination; a lowest-cost/best-cost routing determination, and a per service routing determination.

11. A device according to claim 1 and wherein said external control device is operative to generate said control signal in response to a selection of an application type.

12. A device according to claim 11 and wherein said application type comprises one of the following: private type voice session; and business type voice session.

13. A device according to claim 12 and wherein said business type voice session comprises at least one session via a virtual private network (VPN).

14. A device according to claim 1, wherein said transport layer comprises at least one of the following: an ATM layer (135, 22) and a Frame-Relay.

15. A device according to claim 1, wherein said coded voice signals are received from a cellular network.

16. A communication apparatus comprising the device according to any one of claims 1 to 15, and
a transport layer interface;
wherein the voice signal mapper(120) of said device is operatively associated with the transport layer interface (135, 140).

17. A communication apparatus according to claim 16 and also comprising a digital-subscriber-line (DSL) modem (145) operatively associated with the transport layer and operative to receive said mapped voice signals via the transport layer and to transmit said mapped voice signals to a DSL Access Multiplexer (DSLAM)(60).

18. A communication apparatus according to claim 17 and wherein said DSL modem (145) comprises a xDSL modem (150).

19. A communication apparatus according to claim 16 and wherein said interface unit(100) receives said voice information from at least one of the following: at least one communication appliance (40, 45) and a PBX (55).

20. A communication apparatus according to claim 19 and wherein said at least one communication appliance (40, 45) comprises at least one of the following: a telephone (40), a facsimile, and a modem-based appliance (45).

21. A communication apparatus according to claim 16 and wherein said transport layer interface (150) is operatively associated with at least one of the following: an ATM layer (140); and a Frame-Relay.

22. A communication apparatus comprising at least two communication apparatus according to any one of Claims 16 to 21.

23. A communication apparatus according to claim 22 wherein said at least two of the mode selectors (115) are controllable by at least one external control device.

24. A communication apparatus according to claim 22, wherein each of said at least two mode selectors (115) is operative to select one of the plurality of modes of mapping the coded voice signals in response to control signals provided by at least two external control devices each associated with a mode selector (115) corresponding thereof.

25. A communication system comprising:
the device according to any one of Claims 1 to 15,
at least one communication appliance(40, 45),
wherein said device is in a form of an integrated access device (IAD)(50) operatively associated with said at least one communication appliance and operative to obtain voice information received from said at least one communication appliance in the form of coded voice signals, and to selectively map the coded voice signals of each voice session according to one of a plurality of mapping modes for transmitting the mapped voice information over a transport communication network (22);
the system further comprises a Digital Subscriber Line Access Multiplexer (DSLAM)(60) operatively associated with the IAD (50) and the transport communication network (22), wherein said transport communication network (22) being operatively associated with at least a non-packet-based network (20) and a packet-based network (25); said DSLAM (60) is operative to transmit said mapped voice information signals via the transport communication network (22) with a routing selection to one or another of said at least the non-packet-based network and the packet-based network (25), said routing selection being performed at the IAD (50) together with the selection of mapping mode of the voice coded signals.

26. The communication system according to Claim 25,
wherein the transport network (22) is an ATM network, said integrated access device (IAD)(50) is capable of mapping the voice coded signals into ATM-over-xDSL format having an ATM layer selectively modified by one of a plurality of mapping modes respectively suitable to said at least the non-packet-based network and the packet-based network; and wherein
the DSLAM (60) is operative to convert said voice coded signals received in ATM-over-xDSL format into ATM format and transmit said signals via the ATM network (22) to a particular network of said at least the non-packet-based network and the packet-based network according to the mode selected for mapping the voice coded signals.

27. A communication system according to claim 26 and also comprising a PBX (55) operatively associated with said at least one communication appliance (40,45) and the IAD (50), wherein said voice information received from said at least one communication appliance is provided to the IAD (50) via the PBX (55).

28. A communication system according to claim 26 or claim 27 and also comprising a gateway (30) and a local exchange (LE)(28) operatively associated with the gateway, and operative to allow association of an ATM network (22) with a switched network (20).

29. A communication system according to claim 26 and further comprising a router (35) that is operative to allow association of an ATM network (22) with a packet-based network (25).

30. A communication system according to claim 29 and wherein the packet-based network (25) comprises at least one of the following configurations: a WAN and a MAN.

31. A communication system according to claim 30 and wherein each of said configurations is operative to provide access to at least one of the following: the Internet; an Intranet; and an Extranet.

32. A communication system according to claim 26 and wherein the voice signals are provided in accordance with a routing selection to either a non-packet-based network (20) or a packet-based network (25), said routing selection is performed at the IAD in response to a selection of an application type.

33. A communication system according to claim 32 and wherein said application type comprises one of the following: private type voice session; and business type voice session.

34. A communication system according to claim 33 and wherein said business type voice session comprises at least one session via a virtual private network (VPN).

35. A method for selecting a mode of mapping voice information for transmission over a transport layer of a communication network, the method comprising:
receiving voice signals in a form of coded voice signals; and
for each voice session, in response to an external control signal, selecting one of a plurality of modes of mapping said voice signals for transmission over the transport layer to one of a plurality of networks respectively associated with the plurality of modes of mapping.

36. A method according to Claim 35 comprising a preliminary step of converting the voice information to the coded voice signals using a compression algorithm.

37. A method according to claim 36, wherein said plurality of modes of mapping the coded voice signals comprises: a voice over Internet Protocol (VoIP) mode; and a voice over ATM (VoATM) mode.

38. A method according to claim 35, further comprising the step of mapping the coded voice signals according to said one of a plurality of modes of mapping the coded voice signals thereby to generate mapped voice signals suitable for transmission over the transport layer.

39. A method according to claim 36 and wherein said converting step comprises the steps of:
converting the voice information to voice signals in a pulse-code-modulation (PCM) G.711 format; and
converting said voice signals in the PCM G.711 format to said coded voice signals.

40. A method according to claim 35 or 36 and wherein said control signal is generated in response to an event matching at least one criterion determined by a communication network operator.

41. A method according to claim 40, wherein said at least one criterion comprises at least one of the following: a call destination determination; a subscriber registration predetermination; a network configuration determination; a predetermined communication load in the communication network; a determination of congestion of voice sessions; a determination of failure of a communication route; a load sharing determination; a lowest-cost/best-cost routing determination, and a per service routing determination.

42. A method according to claim 35 or 36 and wherein said selecting step comprises the step of selecting said one of a plurality of modes of mapping the coded voice signals before or at initialization of each voice session or a portion thereof.

43. A method according to claim 35 or 36 and wherein said control signal is operative to determine said one of a plurality of modes of mapping the coded voice signals.

44. A method according to claim 35 or 36 and wherein said control signal is provided by at least one of the following: a local exchange (LE), a gateway, a private branch exchange (PBX), and a network server.

45. A method according to any of claims 35 or 36 and wherein said selecting step is performed in response to a selection of an application type.

46. A method according to claim 45 and wherein said application type comprises one of the following: private type voice session; and business type voice session.

47. A method according to claim 46 and wherein said business type voice session comprises at least one session via a virtual private network (VPN).

48. A method according to claim 35, wherein said voice signals are received from a cellular network.

## Patentansprüche

1. Vorrichtung zur Verwendung in einem Kommunikationsnetzwerk, dazu eingerichtet, im Betrieb mit einer Transportschicht und einer Schnittstelleneinheit in Beziehung zu stehen und dazu eingerichtet, kodierte Sprachsignale zu empfangen, wobei die Vorrichtung umfasst:
einen Modusselektor (115), der dazu eingerichtet ist, als Antwort auf ein Steuersignal von einer externen Steuervorrichtung für jede Sprachsitzung einen aus einer Mehrzahl von Modi des Abbildens kodierter Sprachsignale für eine Übertragung über eine Transportschicht auszuwählen; und
einen Sprachsignalabbilder (120), der mit dem Modusselektor (115) und der Transportschicht im Betrieb in Beziehung steht und betriebsfähig ist, die kodierten Sprachsignale gemäß dem Ausgewählten der Mehrzahl von Modi des Abbildens abzubilden, um **dadurch** abgebildete Sprachsignale zu erzeugen, die für eine Übertragung über die Transportschicht an eines aus einer Mehrzahl von Netzwerken (20, 25) zu erzeugen, die jeweils mit der Mehrzahl von Modi des Abbildens in Beziehung stehen.

2. Vorrichtung nach Anspruch 1, die einen Codec (110) umfasst, der betriebsfähig ist, empfangene Sprachsignale zu kodierten Sprachsignalen unter Verwendung eines Kodieralgorithmus zu konvertieren.

3. Vorrichtung nach Anspruch 2, wobei der Kodieralgorithmus zumindest einen der Folgenden umfasst:
ein Algorithmus, der mit der ITU-Empfehlung G.711 kompatibel ist;
ein Algorithmus, der mit der ITU-Empfehlung G.723.1 kompatibel ist;
ein Algorithmus, der mit der ITU-Empfehlung G.726 kompatibel ist;
ein Algorithmus, der mit der ITU-Empfehlung G.728 kompatibel ist;
ein Algorithmus, der mit der ITU-Empfehlung G.729 und seiner Anhänge kompatibel ist;
ein GSM-Algorithmus mit voller Rate;
ein GSM-Algorithmus mit halber Rate; und
ein GSM-Algorithmus mit verbesserter Rate.

4. Vorrichtung nach Anspruch 1, wobei die kodierten Sprachsignale die Form von kodierten Sprachrahmen aufweisen und die Mehrzahl der Modi des Abbildens der kodierten Sprachrahmen zumindest einen der Folgenden umfasst: ein VoIP-Modus ("VoIP = Voice over Inter Protocol"/Sprache-über-Internet-Protokoll); und ein VoATM-Modus ("VoATM = Voice over ATM"/Sprache über ATM).

5. Vorrichtung nach Anspruch 2 oder 3, die weiterhin eine Schnittstelleneinheit (100) umfasst, die in der Lage ist, Sprachinformationen zu Sprachsignalen in einem PCM-G.711-Format ("PCM = Pulse-Code-Modulation"/ Pulskodemodulation) zu konvertieren.

6. Vorrichtung nach Anspruch 1, wobei die externe Steuervorrichtung zumindest eines der Folgenden umfasst: eine Ortsvermittlungsstelle ("LE = Local Exchange") (28), ein Gateway (30), eine Nebenstellenanlage ("PBX = Private Branch Exchange") (55) und einen Netzwerkserver.

7. Vorrichtung nach Anspruch 6, wobei das Steuersignal betriebsfähig ist, den Einen aus der Mehrzahl von Modi des Abbildens der kodierten Sprachsignale zu bestimmen.

8. Vorrichtung nach Anspruch 6, wobei das Steuersignal als Reaktion auf eine Entscheidung erzeugt wird, die auf zumindest einer der folgenden Ebenen initiiert wird: eine Benutzerebene, eine Steuersignalgebungsebene; und eine Verwaltungsebene.

9. Vorrichtung nach einem der Ansprüche 1 bis 8, wobei die externe Steuervorrichtung betriebsfähig ist, das Steuersignal als Reaktion auf ein Ereignis zu erzeugen, das mit zumindest einem Kriterium übereinstimmt, das von einem Betreiber des Kommunikationsnetzwerkes bestimmt ist.

10. Vorrichtung nach Anspruch 9, wobei das zumindest eine Kriterium zumindest eines der Folgenden umfasst: eine Rufzielbestimmung; eine Teilnehmerregistrierungsvorherbestimmung; eine Netzwerkkonfigurationsbestimmung; eine vorherbestimmte Kommunikationslast in dem Kommunikationsnetzwerk; eine Bestimmung einer Stauung von Sprachsitzungen; eine Bestimmung eines Fehlverhaltens eines Kommunikationsweges; eine Lastteilungsbestimmung; eine Niedrigste-Kosten-/Beste-Kosten-Weiterleitungsbestimmung und eine Pro-Dienst-Weiterleitungsbestimmung.

11. Vorrichtung nach Anspruch 1, wobei die externe Steuervorrichtung betriebsfähig ist, das Steuersignal als Antwort auf eine Auswahl eines Anwendungstyps zu erzeugen.

12. Vorrichtung nach Anspruch 11, wobei der Anwendungstyp zumindest einen der Folgenden umfasst: Sprachsitzung vom privaten Typ; und Sprachsitzung vom geschäftlichen Typ.

13. Vorrichtung nach Anspruch 12, wobei die Sprachsitzung vom geschäftlichen Typ zumindest eine Sitzung über ein virtuelles privates Netzwerk ("VPN = Virtual Private Network") umfasst.

14. Vorrichtung nach Anspruch 1, wobei die Transportschicht zumindest eine der Folgenden umfasst: eine ATM-Schicht (135, 22) und ein Frame-Relay.

15. Vorrichtung nach Anspruch 1, wobei die kodierten Sprachsignale von einem zellularen Netzwerk empfangen werden.

16. Kommunikationsapparat, der die Vorrichtung nach einem der Ansprüche 1 bis 15 umfasst, und
eine Transportschichtschnittstelle;
wobei der Sprachsignalabbilder (120) der Vorrichtung im Betrieb mit der Transportschichtschnittstelle (135, 140) in Beziehung steht.

17. Kommunikationsapparat nach Anspruch 16, der auch ein DSL-Modem ("DSL = Digital-Subscriber-Line"/ digitale Teilnehmerleitung) (145) umfasst, das mit der Transportschicht im Betrieb in Beziehung steht und betriebsfähig ist, die abgebildeten Sprachsignale über die Transportschicht zu empfangen und die abgebildeten Sprachsignale an einen DSL-Zugangsmultiplexer ("DSLAM = DSL Access Multiplexer") (60) zu senden.

18. Kommunikationsapparat nach Anspruch 17, wobei das DSL-Modem 145 ein xDSL-Modem (150) umfasst.

19. Kommunikationsapparat nach Anspruch 16, wobei die Schnittstelleneinheit (100) die Sprachinformationen von zumindest einem der Folgenden empfängt: zumindest ein Kommunikationsgerät (40, 45) und eine PBX (55).

20. Kommunikationsapparat nach Anspruch 19, wobei das zumindest eine Kommunikationsgerät (40, 45) zumindest eines der Folgenden umfasst: ein Telefon (40), ein Fax und ein modembasiertes Gerät (45).

21. Kommunikationsapparat nach Anspruch 16, wobei die Transportschichtschnittstelle (150) im Betrieb mit zumindest einem der Folgenden in Beziehung steht: eine ATM-Schicht (140); und ein Frame-Relay.

22. Kommunikationsapparat, der zumindest zwei Kommunikationsapparate gemäß einem der Ansprüche 16 bis 21 umfasst.

23. Kommunikationsapparat nach Anspruch 22, wobei die mindestens zwei Modusselektoren (115) über zumindest eine externe Steuervorrichtung steuerbar sind.

24. Kommunikationsapparat nach Anspruch 22, wobei jeder der zumindest zwei Modusselektoren (115) betriebsfähig ist, einen aus der Mehrzahl von Modi des Abbildens der kodierten Sprachsignale als Reaktion auf Steuersignale auszuwählen, die von zumindest zwei externen Steuervorrichtungen zur Verfügung gestellt werden, die jeweils mit einem entsprechenden Modusselektor (115) in Beziehung stehen.

25. Kommunikationssystem, umfassend:
die Vorrichtung nach einem der Ansprüche 1 bis 15,
zumindest ein Kommunikationsgerät (40, 45),
wobei die Vorrichtung die Form einer integrierten Zugangsvorrichtung ("IAD = Integrated Access Device") (50) aufweist, die im Betrieb mit dem zumindest einem Kommunikationsgerät in Beziehung steht und betriebsfähig ist, Sprachinformationen zu erlangen, die von dem zumindest einen Kommunikationsgerät in Form von kodierten Sprachsignalen empfangen werden, und um selektiv die kodierten Sprachsignale jeder Sprachsitzung gemäß einem aus einer Mehrzahl von Abbildungsmodi abzubilden, um die abgebildeten Sprachinformationen über ein Transportkommunikationsnetzwerk (22) zu übertragen;
wobei das System weiterhin einen DSLAM ("DSLAM = Digital-Subscriber-Line Access Multiplexer"/ DSL-Zugangsmultiplexer) (60) umfasst, der im Betrieb mit der IAD 50 und dem Transportkommunikationsnetzwerk (22) in Beziehung steht, wobei das Transportkommunikationsnetzwerk (22) im Betrieb mit zumindest einem nicht-paketbasierten Netzwerk (20) und einem paketbasierten Netzwerk (25) in Beziehung steht; wobei der DSLAM (60) betriebsfähig ist, um die abgebildeten Sprachinformationssignale über das Transportkommunikationsnetzwerk (22) mit einer Routenauswahl an das Eine oder das Andere des zumindest nicht-paketbasierten Netzwerks und des paketbasierten Netzwerks (25) zu übertragen, wobei die Routenauswahl an der IAD (50) zusammen mit der Auswahl des Abbildungsmodus der sprachkodierten Signale durchgeführt wird.

26. Kommunikationssystem nach Anspruch 25, wobei das Transportnetzwerk (22) ein ATM-Netzwerk ist, die integrierte Zugangsvorrichtung (IAD) (50) in der Lage ist, die sprachkodierten Signale in ein ATM-über-xDSL-Format abzubilden, das eine ATM-Schicht besitzt, die selektiv durch einen aus einer Mehrzahl von Abbildungsmodi modifiziert ist, der jeweils für das zumindest nichtpaketbasierte Netzwerk und das paketbasierte Netzwerk geeignet ist; und wobei
der DSLAM (60) betriebsfähig ist, die in dem ATM-über-xDSL-Format empfangenen sprachkodierten Signale in ein ATM-Format zu konvertieren und die Signale über das ATM-Netzwerk (22) an ein bestimmtes Netzwerk des zumindest nicht-paketbasierten Netzwerks und des paketbasierten Netzwerks gemäß dem Modus zu senden, der für das Abbilden der sprachkodierten Signale ausgewählt ist.

27. Kommunikationssystem nach Anspruch 26, das auch eine PBX (55) umfasst, die im Betrieb mit dem zumindest einen Kommunikationsgerät (40, 45) und der IAD (50) in Beziehung steht, wobei die von dem zumindest einen Kommunikationsgerät empfangenen Sprachinformationen der IAD (50) über die PBX (55) zur Verfügung gestellt werden.

28. Kommunikationssystem nach Anspruch 26 oder 27, das auch ein Gateway (30) und eine Ortsvermittlungsstelle ("LE = Local Exchange") (28) umfasst, die im Betrieb mit dem Gateway in Beziehung stehen und die betriebsfähig sind, es zu ermöglichen, ein ATM-Netzwerk (22) mit einem vermittelten Netzwerk (20) in Beziehung zu setzen.

29. Kommunikationssystem nach Anspruch 26, das ferner einen Router (35) umfasst, der betriebsfähig ist, es zu ermöglichen, ein ATM-Netzwerk (22) mit einem paketbasierten Netzwerk (25) in Beziehung zu setzen.

30. Kommunikationssystem nach Anspruch 29, wobei das paketbasierte Netzwerk (25) zumindest eine der folgenden Konfigurationen umfasst: ein WAN und ein MAN.

31. Kommunikationssystem nach Anspruch 30, wobei jede der Konfigurationen betriebsfähig ist, einen Zugang zu mindestens einem der Folgenden zur Verfügung zu stellen: das Internet; ein Intranet; und ein Extranet.

32. Kommunikationssystem nach Anspruch 26, wobei die Sprachsignale gemäß einer Routenauswahl entweder einem nicht-paketbasierten Netzwerk (20) oder einem paketbasierten Netzwerk (25) zur Verfügung gestellt werden, wobei die Routenauswahl an der IAD in Abhängigkeit von einer Auswahl eines Anwendungstyps durchgeführt wird.

33. Kommunikationssystem nach Anspruch 32, wobei der Anwendungstyp einen der Folgenden umfasst: eine Sprachsitzung vom privaten Typ; und eine Sprachsitzung vom geschäftlichen Typ.

34. Kommunikationssystem nach Anspruch 33, wobei die Sprachsitzung vom geschäftlichen Typ zumindest eine Sitzung über ein virtuelles privates Netzwerk (VPN) umfasst.

35. Verfahren zum Auswählen eines Modus des Abbildens von Sprachinformationen für eine Übertragung über eine Transportschicht eines Kommunikationsnetzwerks, wobei das Verfahren umfasst:
Empfangen von Sprachsignalen in Form von kodierten Sprachsignalen; und für jede Sprachsitzung, als Reaktion auf ein externes Steuersignal, Auswählen eines aus einer Mehrzahl von Modi des Abbildens der Sprachsignale für eine Übertragung über die Transportschicht an eines aus einer Mehrzahl von Netzwerken, das jeweils mit der Mehrzahl der Modi des Abbildens in Beziehung steht.

36. Verfahren nach Anspruch 35, das einen vorläufigen Schritt des Konvertierens der Sprachinformationen in die kodierten Sprachsignale unter Verwendung eines Kompressionsalgorithmus umfasst.

37. Verfahren nach Anspruch 36, wobei die Mehrzahl der Modi des Abbildens der kodierten Sprachsignale umfasst: einen VoIP-Modus ("VoIP = Voice over Internet Protocol"/Sprache-über-Internetprotokoll); und einen VoATM-Modus ("VoATM = Voice over ATM"/Sprache-über-ATM).

38. Verfahren nach Anspruch 35, das weiterhin den Schritt des Abbildens der kodierten Sprachsignale gemäß dem Einen aus einer Mehrzahl von Modi des Abbildens der kodierten Sprachsignale umfasst, wodurch abgebildete Sprachsignale erzeugt werden, die für eine Übertragung über die Transportschicht geeignet sind.

39. Verfahren nach Anspruch 36, wobei der Konvertierungsschritt die Schritte umfasst:
Konvertieren der Sprachinformationen in Sprachsignale in einem PCM-G.711-Format ("PCM = Pulse Code Modulation"/Pulskodemodulation); und
Konvertieren der Sprachsignale in dem PCM-G.711-Format in die kodierten Sprachsignale.

40. Verfahren nach Anspruch 35 oder 36, wobei das Steuersignal als reaktion auf ein Ereignis erzeugt wird, das mit zumindest einem Kriterium übereinstimmt, das durch einen Betreiber eines Kommunikationsnetzwerks bestimmt ist.

41. Verfahren nach Anspruch 40, wobei das zumindest eine Kriterium zumindest eines der Folgenden umfasst: eine Rufzielbestimmung; eine Teilnehmerregistrierungsvorherbestimmung; eine Netzwerkkonfigurationsbestimmung; eine vorherbestimmte Kommunikationslast in dem Kommunikationsnetzwerk; eine Bestimmung einer Stauung von Sprachsitzungen; eine Bestimmung eines Fehlverhaltens einer Kommunikationsroute; eine Lastteilungsbestimmung; eine Niedrigste-Kosten-/Beste-Kosten-Routenbestimmung und eine Routenbestimmung pro Dienst.

42. Verfahren nach Anspruch 35 oder 36, wobei der Auswählschritt den Schritt des Auswählens des einen aus der Mehrzahl von Modi des Abbildens der kodierten Sprachsignale vor oder bei einer Initialisierung jeder Sprachsitzung oder eines Teils derselben umfasst.

43. Verfahren nach Anspruch 35 oder 36, wobei das Steuersignal betriebsfähig ist, den Einen aus einer Mehrzahl von Modi des Abbildens der kodierten Sprachsignale zu bestimmen.

44. Verfahren nach Anspruch 35 oder 36, wobei das Steuersignal durch zumindest eines der Folgenden zur Verfügung gestellt wird: eine Ortsvermittlungsstelle ("LE = Local Exchange), ein Gateway, eine Nebenstellenanlage ("PBX = Private Branch Exchange") und ein Netzwerkserver.

45. Verfahren nach einem der Ansprüche 35 oder 36, wobei der Auswählschritt in Abhängigkeit von einer Auswahl eines Anwendungstyps durchgeführt wird.

46. Verfahren nach Anspruch 45, wobei der Anwendungstyp einen der Folgenden umfasst: einen Sprachsitzung vom privaten Typ; und eine Sprachsitzung vom geschäftlichen Typ.

47. Verfahren nach Anspruch 46, wobei die Sprachsitzung vom geschäftlichen Typ zumindest eine Sitzung über ein virtuelles privates Netzwerk (VPN) umfasst.

48. Verfahren nach Anspruch 35, wobei die Sprachsignale vom einem zellularen Netzwerk empfangen werden.

## Revendications

1. Dispositif destiné à être utilisé dans un réseau de communication, adapté afin d'être associé de manière fonctionnelle à une couche de transport et une unité d'interface et adapté afin de recevoir des signaux vocaux codés, le dispositif comprenant :
■ un sélecteur (115) de mode adapté, en réponse à un signal de commande provenant d'un dispositif de commande externe, afin de sélectionner pour chaque session vocale un parmi une pluralité de modes de mappage des signaux vocaux codés, pour une transmission sur une couche de transport ; et
■ un dispositif de mappage (120) de signaux vocaux associé de manière fonctionnelle au sélecteur (115) de mode et à la couche de transport et fonctionnant afin de mapper les signaux vocaux codés selon l'un sélectionné parmi la pluralité de modes de mappage, afin de générer ainsi des signaux vocaux mappés appropriés à une transmission sur la couche de transport vers un parmi une pluralité de réseaux (20, 25) associés respectivement à la pluralité de modes de mappage.

2. Dispositif selon la revendication 1, comprenant un codec (110) fonctionnant afin de convertir des signaux vocaux reçus en signaux vocaux codés en utilisant un algorithme de codage.

3. Dispositif selon la revendication 2 et dans lequel ledit algorithme de codage comprend au moins un parmi le groupe suivant : un algorithme compatible avec la recommandation ITU G.711 ; un algorithme compatible avec la recommandation ITU G.723.1 ; un algorithme compatible avec la recommandation ITU G.726 ; un algorithme compatible avec la recommandation ITU G.728 ; un algorithme selon la recommandation ITU G.729 et ses annexes ; un algorithme GSM à plein débit ; un algorithme GSM à demi débit ; et un algorithme GSM à débit amélioré.

4. Dispositif selon la revendication 1 et dans lequel lesdits signaux vocaux codés sont de la forme de trames vocales codées, et la pluralité de modes de mappage desdites trames vocales codées comprennent au moins un parmi le groupe suivant : un mode VoIP (Voice Internet Protocol : voie sur réseau IP (protocole Internet)) ; et un mode VoATM (Voice Over ATM : voie sur réseau ATM (mode de transfert asynchrone)).

5. Dispositif selon la revendication 2 ou 3, comprenant en outre une unité (100) d'interface qui est capable de convertir des informations vocales en signaux vocaux selon un format G.711 de modulation d'impulsion codée (PCM : Pulse Code Modulation).

6. Dispositif selon la revendication 1 et dans lequel ledit dispositif de commande externe comprend au moins un parmi le groupe suivant : un autocommutateur local (LE) (28), une passerelle (30), un autocommutateur privé (PBX) (55), et un serveur de réseau.

7. Dispositif selon la revendication 6 et dans lequel ledit signal de commande fonctionne afin de déterminer ledit un parmi une pluralité de modes de mappage des signaux vocaux codés.

8. Dispositif selon la revendication 6 et dans lequel ledit signal de commande est généré en réponse à une décision initiée à au moins un parmi les niveaux suivants : un niveau d'utilisateur, un niveau de signalisation de commande ; et un niveau de gestion.

9. Dispositif selon l'une quelconque des revendications 1 à 8 et dans lequel ledit dispositif de commande externe fonctionne afin de générer ledit signal de commande en réponse à un évènement correspondant à au moins un critère déterminé par un opérateur du réseau de communication.

10. Dispositif selon la revendication 9 et dans lequel ledit au moins un critère comprend au moins un parmi le groupe suivant : une détermination de destination d'appel ; une prédétermination d'inscription d'abonné ; une détermination de configuration de réseau ; une charge de communication prédéterminée sur le réseau de communication ; une détermination d'un encombrement des sessions vocales ; une détermination d'un chemin de communication ; une détermination d'un partage de charge ; une détermination d'un acheminement au coût le plus bas/meilleur coût, et une détermination d'acheminement par service.

11. Dispositif selon la revendication 1 et dans lequel ledit dispositif de commande externe fonctionne afin de générer ledit signal de commande en réponse à une sélection d'un type d'application.

12. Dispositif selon la revendication 11 et dans lequel ledit type d'application comprend une parmi le groupe suivant : une session vocale de type privé ; une session vocale de type commercial.

13. Dispositif selon la revendication 12 et dans lequel ladite session vocale du type commercial comprend au moins une session par le biais d'un réseau privé virtuel (RPV).

14. Dispositif selon la revendication 1 et dans lequel ladite couche de transport comprend au moins un parmi le groupe suivant : une couche ATM (135, 22) et un relais de trames.

15. Dispositif selon la revendication 1 et dans lequel lesdits signaux vocaux codés sont reçus depuis un réseau cellulaire.

16. Appareil de communication comprenant le dispositif selon l'une quelconque des revendications 1 à 15, et
■ une interface de couche de transport ;
■ dans lequel le dispositif de mappage (120) de signaux vocaux dudit dispositif est associé de manière fonctionnelle à l'interface (135, 140) de couche de transport.

17. Appareil de communication selon la revendication 16 et comprenant également un modem DSL (Digital Suscriber Line : haut débit sur paires téléphoniques de cuivre) (145) associé de manière fonctionnelle à la couche de transport et fonctionnant afin de recevoir lesdits signaux vocaux mappés par le biais de la couche de transport et afin de transmettre lesdits signaux vocaux mappés à un multiplexeur d'accès DSL (DSLAM) (60).

18. Appareil de communication selon la revendication 17 et dans lequel ledit modem DSL (145) comprend un modem xDSL (150).

19. Appareil de communication selon la revendication 16 et dans lequel ladite unité (100) d'interface reçoit lesdites informations vocales depuis au moins un parmi le groupe suivant : au moins un appareil domestique (40, 45) de communication et un PBX (55).

20. Appareil de communication selon la revendication 19 et dans lequel ledit au moins un appareil domestique (40, 45) de communication comprend au moins un parmi le groupe suivant: un téléphone (40), un télécopieur, et un appareil domestique (45) basé sur un modem.

21. Appareil de communication selon la revendication 16 et dans lequel ladite interface (150) de couche de transport est associée de manière fonctionnelle à au moins un parmi le groupe suivant : une couche ATM (140) ; un relais de trame.

22. Appareil de communication comprenant au moins deux appareils de communication selon l'une quelconque des revendications 16 à 21.

23. Appareil de communication selon la revendication 22 et dans lequel lesdits au moins deux parmi les sélecteurs de mode (115) peuvent être commandés par au moins un dispositif de commande externe.

24. Appareil de communication selon la revendication 22 et dans lequel chacun parmi lesdits au moins deux sélecteurs de mode (115) fonctionne afin de sélectionner un parmi la pluralité de modes de mappage des signaux vocaux codés en réponse à des signaux de commande fournis par au moins deux dispositifs de commande externe associés chacun à un sélecteur de mode (115) correspondant à ces derniers.

25. Système de communication comprenant :
le dispositif selon l'une quelconque des revendications 1 à 15,
au moins un appareil domestique (40, 45) de communication,
dans lequel ledit dispositif est de la forme d'un dispositif d'accès intégré (IAD) (50), associé de manière fonctionnelle audit au moins un appareil domestique de communication et fonctionnant afin d'obtenir des informations vocales reçues depuis ledit au moins un appareil domestique de communication sous la forme de signaux vocaux codés, et afin de mapper de manière sélective des signaux vocaux codés de chaque session vocale selon l'un parmi une pluralité de modes de mappage destinés à transmettre des informations vocales mappées sur un réseau (22) de communication de transport ;
le système comprend en outre un multiplexeur d'accès DSL (DSLAM) (60) associé de manière fonctionnelle à l'IAD (50) et au réseau (22) de communication de transport et dans lequel ledit réseau (22) de communication de transport est associé de manière fonctionnelle à au moins un réseau (20) non basé sur un transfert par paquet et un réseau (25) basé sur un transfert par paquet ; ledit DSLAM (60) fonctionne afin de transmettre lesdits signaux d'informations vocales mappés par le biais du réseau (22) de communication de transport avec une sélection d'acheminement vers l'un ou un autre desdits au moins réseau non basé sur un transfert par paquet et réseau (25) basé sur un transfert par paquet, ladite sélection d'acheminement étant effectuée au niveau de l'IAD (50) conjointement avec la sélection de mode de mappage des signaux codés vocaux.

26. Système de communication selon la revendication 25 et dans lequel le réseau (22) de transport est un réseau ATM, ledit dispositif d'accès intégré (IAD) (50) est capable de mapper les signaux codés vocaux selon un format ATM sur xDSL ayant une couche ATM modifiée de manière sélective par un parmi une pluralité de modes de mappage respectivement appropriés auxdits moins réseau non basé sur un transfert par paquet et réseau basé sur un transfert par paquet ; et dans lequel
le DSLAM (60) fonctionne afin de convertir lesdits signaux codés vocaux reçus selon le format ATM sur xDSL en un format ATM et transmettre lesdits signaux par le biais du réseau ATM (22) vers un réseau particulier desdits au moins réseau non basé sur un transfert par paquet et réseau basé sur un transfert par paquet, selon le mode sélectionné pour un mappage des signaux codés vocaux.

27. Système de communication selon la revendication 26 et comprenant également un PBX (55) associé de manière fonctionnelle audit au moins un appareil domestique (40, 45) de communication et à l'IAD (50) et dans lequel lesdites informations vocales reçues depuis ledit au moins un appareil domestique de communication sont fournies à l'IAD (50) par le biais du PBX (55) .

28. Système de communication selon la revendication 26 ou 27 et comprenant également une passerelle 30 et un autocommutateur local (LE) (28) associé de manière fonctionnelle à la passerelle, et fonctionnant afin d'autoriser une association d'un réseau ATM (22) à un réseau commuté (20).

29. Système de communication selon la revendication 26 et comprenant en outre un dispositif d'acheminement (35) qui fonctionne afin d'autoriser une association d'un réseau ATM (22) à un réseau (25) basé sur un transfert par paquet.

30. Système de communication selon la revendication 29 et dans lequel le réseau (25) basé sur un transfert par paquet comprend au moins une parmi les configurations suivantes : un WAN (réseau longue distance) et un MAN (réseau de zone urbaine).

31. Système de communication selon la revendication 30 et dans lequel chacune desdites configurations fonctionne afin de fournir un accès à au moins un parmi le groupe suivant : l'Internet ; un Intranet ; et un Extranet.

32. Système de communication selon la revendication 26 et dans lequel les signaux vocaux sont fournis conformément à une sélection d'acheminement vers soit un réseau (20) non basé sur un transfert par paquet, soit un réseau (25) basé sur un transfert par paquet, ladite sélection d'acheminement est effectuée au niveau de l'IAD en réponse à une sélection d'un type d'application.

33. Système de communication selon la revendication 32 et dans lequel ledit type d'application comprend une parmi le groupe suivant : une session vocale de type privé ; et une session vocale de type commercial.

34. Système de communication selon la revendication 33 et dans lequel ladite session vocale de type commercial comprend au moins une session par le biais d'un réseau privé virtuel (RPV).

35. Procédé destiné à sélectionner un mode de mappage d'informations vocales pour une transmission sur une couche de transport d'un réseau de communication, le procédé comprenant les étapes consistant à :
■ recevoir des signaux vocaux sous une forme de signaux vocaux codés ; et
■ pour chaque session vocale, en réponse à un signal de commande externe, sélectionner un parmi une pluralité de modes de mappage desdits signaux vocaux pour une transmission sur la couche de transport vers un parmi une pluralité de réseaux associés respectivement à la pluralité de modes de mappage.

36. Procédé selon la revendication 35 comprenant une étape préliminaire consistant à convertir les informations vocales en signaux vocaux codés en utilisant un algorithme de compression.

37. Procédé selon la revendication 36 et dans lequel ladite pluralité de mode de mappage des signaux vocaux codés comprend : un mode VoIP [Voice over Internet Protocol : voie sur réseau IP (protocole Internet)] ; et un mode VoATM (Voice Over ATM : voie sur réseau ATM (mode de transfert asynchrone)).

38. Procédé selon la revendication 35, comprenant en outre l'étape consistant à mapper les signaux vocaux codés selon ledit un parmi une pluralité de modes de mappage des signaux vocaux codés afin de générer ainsi des signaux vocaux mappés appropriés à une transmission sur la couche de transport.

39. Procédé selon la revendication 36 et dans lequel ladite étape de conversion comprend les étapes consistant à :
■ convertir les informations vocales en signaux vocaux selon un format G.711 de modulation d'impulsion codée (PCM) ; et
■ convertir lesdits signaux vocaux selon le format G.711 PCM en lesdits signaux vocaux codés.

40. Procédé selon la revendication 35 ou 36 et dans lequel ledit signal de commande est généré en réponse à un évènement correspondant à au moins un critère déterminé par un opérateur de réseau de communication.

41. Procédé selon la revendication 40 et dans lequel ledit au moins un critère comprend au moins une parmi le groupe suivant : une détermination de destination d'appel ; une prédétermination d'inscription d'abonné ; une détermination de configuration de réseau ; une charge de communication prédéterminée sur le réseau de communication ; une détermination d'encombrement des sessions vocales ; une détermination de défaillance d'un chemin de communication ; une détermination de partage de charge ; une détermination d'acheminement au coût le plus bas/meilleur coût, et une détermination d'acheminement par service.

42. Procédé selon la revendication 35 ou 36 et dans lequel ladite étape de sélection comprend l'étape consistant à sélectionner ledit un parmi une pluralité de modes de mappage des signaux vocaux codés avant ou à l'initialisation de chaque session vocale ou d'une portion de ces dernières.

43. Procédé selon la revendication 35 ou 36 et dans lequel ledit signal de commande fonctionne afin de déterminer ledit un parmi une pluralité de modes de mappage des signaux vocaux codés.

44. Procédé selon la revendication 35 ou 36 et dans lequel ledit signal de commande est fourni par au moins un parmi le groupe suivant : un autocommutateur local (LE), une passerelle, un autocommutateur privé (PBX), et un serveur de réseau.

45. Procédé selon l'une quelconque des revendications 35 ou 36 et dans lequel ladite étape de sélection est effectuée en réponse à une sélection d'un type d'application.

46. Procédé selon la revendication 45 et dans lequel ledit type d'application comprend l'une parmi le groupe suivant : une session vocale de type privé ; et une session vocale de type commercial.

47. Procédé selon la revendication 46 et dans lequel ladite session vocale de type commercial comprend au moins une session par le biais d'un réseau privé virtuel (RPV).

48. Procédé selon la revendication 35 et dans lequel lesdits signaux vocaux sont reçus depuis un réseau cellulaire.
